# EUROPEAN PATENT APPLICATION

(11) **EP 4 174 746 A1**
(43) Date of publication of application: **03.05.2023**
(21) Application number: 21205608.9
(22) Date of filing: 29.10.2021
(51) Int. Cl.: G06Q 30/06, G06Q 50/12, G06Q 50/22

(54) **SMART HEALTH MANAGEMENT SALES SYSTEM AND METHOD**

(71) Applicant: Senor Tech Co., Ltd., New Taipei City 22150 (TW)
(72) Inventor: CHIU, Hsin-Liang, 22150 New Taipei City (TW)
(74) Representative: CAPRI

(57) **Abstract**

A smart health management sales system includes: a processing unit, determining, according to body temperature data, whether to prohibit from operating or enable to operate the smart health management sales system; a body temperature sensor, driven by the processing unit to measure a body temperature of a user to generate the body temperature data, and transmitting the body temperature data to the processing unit; an inductive hand cleaning device, when sensing that hands of the user are at a spraying position where a cleaning liquid is sprayed, spraying the cleaning liquid, and transmitting a sprayed cleaning liquid signal to the processing unit; and a sales touchscreen, receiving and displaying the body temperature data transmitted by the processing unit, information of cleaning hands of the user, and information of prohibiting from operating or enabling to operate the smart health management sales system.

## Description

### BACKGROUND

### Technical Field

The present invention relates to the field of a sales system, and in particular, to a smart health management sales system and method.

### Related Art

With the continuous innovation of technologies, various functions are also continuously added to a sales system in accordance with the needs of users. For example, when dining in a restaurant, a customer orders food depending on a waiter to record the requested meals on an ordering menu in a handwritten manner, and then the menu is transmitted to a kitchen for preparation. However, there are some disadvantages in this type of ordering manner. For example, a lot of paper resources are wasted because conventional paper menus cannot be reused. In addition, if a customer spends too much time leafing through the menu, a waiter cannot serve other customers due to a long waiting time. When the waiting time is too long, customers tend to have negative emotions and their desire to dine in the restaurant is reduced, which greatly affects the performance of the restaurant. Moreover, a waiter is prone to clerical errors during long hours of work, which may result in wrong recording and wrong delivery of meals, further causing negative reactions from customers.

In view of this, there is an electronic ordering device on the market, which is mainly used to replace conventional paper menus. The electronic ordering device is used to directly order food, and ordering results are directly transmitted to a backend (such as a kitchen) for processing.

By using an electronic ordering device to order food, the problem that conventional paper menus are not environment-friendly can be solved. However, as people gradually pay more attention to health, and considering the occurrence of serious outbreaks of highly infectious diseases, when a carrier infected with a highly infectious disease operates an electronic ordering device, the bacteria or virus of the highly infectious disease may contaminate the electronic ordering device through hands or body of the carrier, causing a next user operating the electronic ordering device to be at risk of being infected with the highly infectious disease.

### SUMMARY

In view of the above-mentioned problem, the objective of the present invention is to provide a smart health management sales system and method, which can prevent in advance a carrier infected with a highly infectious disease from operating an electronic ordering device, and clean hands or body of a user operating the electronic ordering device, thereby reducing a risk of being infected with a highly infectious disease for the user operating the electronic ordering device.

A first aspect of the present invention provides a smart health management sales system, including:
a processing unit, determining, according to body temperature data, whether to prohibit from operating or enable to operate the smart health management sales system;
a body temperature sensor, driven by the processing unit to sense a body temperature of a user to generate the body temperature data, and transmitting the body temperature data to the processing unit;
an inductive hand cleaning device, when sensing that hands of the user are at a spraying position where a cleaning liquid is sprayed, spraying the cleaning liquid, and transmitting a sprayed cleaning liquid signal to the processing unit; and
a sales touchscreen, receiving and displaying the body temperature data transmitted by the processing unit, information of cleaning hands of the user, and information of prohibiting from operating or enabling to operate the smart health management sales system, selecting a form item of the smart health management sales system on the sales touchscreen after the processing unit receives the sprayed cleaning liquid signal, and transmitting the selected form item to the processing unit.

A second aspect of the present invention provides a smart health management sales method, applied to a smart health management sales system, where the smart health management sales method includes the following steps:
driving, by a processing unit of the smart health management sales system, a body temperature sensor of the smart health management sales system to sense a body temperature of a user to generate body temperature data, and transmitting, by the body temperature sensor, the body temperature data to the processing unit;
receiving and displaying, by a sales touchscreen of the smart health management sales system, the body temperature data transmitted by the processing unit, information of cleaning hands of the user, and information of prohibiting from operating or enabling to operate the smart health management sales system;
when an inductive hand cleaning device of the smart health management sales system senses that hands of the user are at a spraying position where a cleaning liquid is sprayed, spraying, by the inductive hand cleaning device, the cleaning liquid; and
selecting a form item of the smart health management sales system on the sales touchscreen after the processing unit receives the sprayed cleaning liquid signal, and transmitting the selected form item to the processing unit.

### BRIEF DESCRIPTION OF THE DRAWINGS

FIG. 1 is a schematic appearance diagram of a partial structure of a smart health management sales system according to the present invention.
FIG. 2 is a block diagram of the smart health management sales system according to the present invention.
FIG. 3 is a flowchart of an operation method of the smart health management sales system according to the present invention.

### DETAILED DESCRIPTION

In order for a person of ordinary skill in the art to which the present invention belongs to further understand the present invention, preferred embodiments of the present invention are listed below, and content of the present invention and effects to be achieved are described in detail with reference to the accompanying drawings.

A smart health management sales system of a preferred embodiment of the present invention is described by using an ordering machine in a restaurant, but this is not intended to limit the smart health management sales system of the present invention, which may also be applied to a sales system such as a ticket machine or a vending machine.

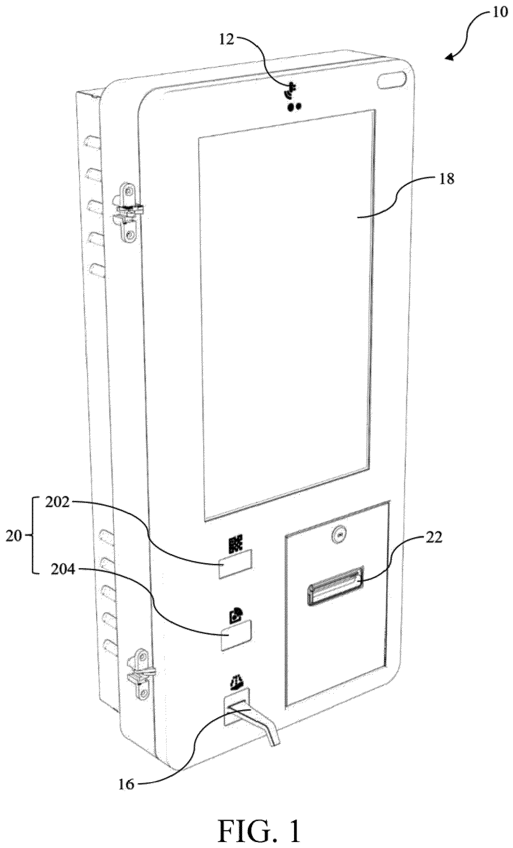

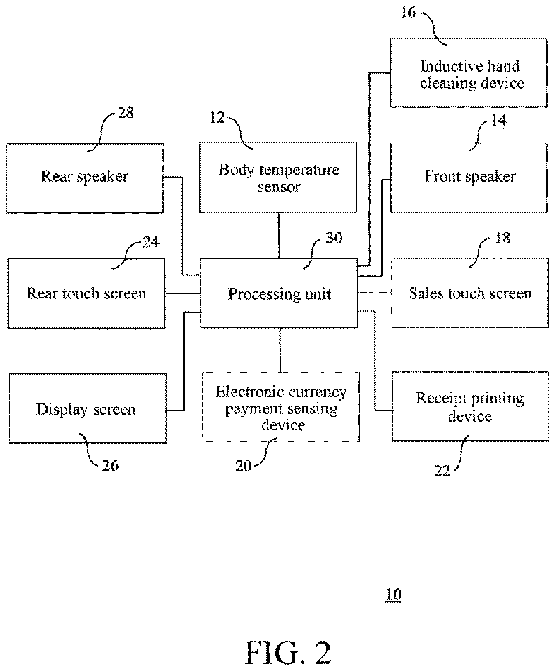

FIG. 1 is a schematic appearance diagram of a partial structure of a smart health management sales system according to the present invention, and FIG. 2 is a block diagram of the smart health management sales system according to the present invention. In FIG. 1 and FIG. 2, the smart health management sales system 10 includes: a body temperature sensor 12, a front speaker 14, an inductive hand cleaning device 16, a sales touchscreen 18, an electronic currency payment sensing device 20, a receipt printing device 22, a rear touchscreen 24, a display screen 26, a rear speaker 28, and a processing unit 30. The front speaker 14 and the rear speaker 28 may be loudspeakers.

When a user operating the smart health management sales system 10 is at a position where the body temperature sensor 12 senses a body temperature of the user, the processing unit 30 drives the body temperature sensor 12 to sense the body temperature of the user to generate body temperature data, and the body temperature sensor 12 transmits the measured body temperature data to the processing unit 30.

The processing unit 30 determines, according to the body temperature data transmitted by the body temperature sensor 12, whether to prohibit from operating or enable to operate the smart health management sales system 10. For example, when the body temperature data measured by the user exceeds a normal healthy body temperature range, the processing unit 30 prohibits the user from operating the smart health management sales system 10, and immediately informs backend staff to fully clean a contaminated machine before a next user operates the system, and reminds the user to go to a doctor as soon as possible. On the contrary, the user can operate the smart health management sales system 10.

When the user is prohibited from operating the smart health management sales system 10, the processing unit 30 transmits a reminder message of cleaning the smart health management sales system 10 to the sales touchscreen 18, and displays the reminder message of cleaning the smart health management sales system 10 on a display picture of the sales touchscreen 18, and the processing unit 30 transmits a reminder voice of cleaning the smart health management sales system 10 to the front speaker 14 to remind the user to go to a doctor as soon as possible, and the front speaker 14 sends a reminder message of cleaning the smart health management sales system 10 to inform backend staff to implement a whole machine cleaning procedure of the smart health management sales system 10 to ensure that a next user is protected from a risk of being infected.

According to a determining result of the body temperature data, the processing unit 30 drives the front speaker 14 to send a voice of informing the user to measure a body temperature, a voice of body temperature data obtained by the user in measuring the body temperature, a voice of prohibiting the user from operating or enabling the user to operate the smart health management sales system 10, and a voice of informing the user to clean hands. Similarly, the processing unit 30 transmits the determining result of the body temperature data to the sales touchscreen 18, to displays, on a display picture of the sales touchscreen 18, information of the user measuring a body temperature, information of the body temperature data obtained by the user in measuring the body temperature, information of prohibiting the user from operating or enabling the user to operate the smart health management sales system 10, and information of informing the user to clean hands.

For example, in a case that the body temperature of the user does not exceed the normal healthy body temperature range, the processing unit 30 drives the front speaker 14 to send a voice of body temperature data obtained by the user in measuring a body temperature, and a voice of enabling the user to operate the smart health management sales system 10. On the contrary, the front speaker 14 sends a voice of body temperature data obtained by the user in measuring a body temperature, a voice of prohibiting the user from operating the smart health management sales system 10, and a voice of reminding the user to go to a doctor as soon as possible. In this case, the sales touchscreen 18 also displays the body temperature data obtained by the user in measuring the body temperature, and displays information of enabling the user to operate the smart health management sales system 10. On the contrary, the sales touchscreen 18 displays the body temperature data obtained by the user in measuring the body temperature, and displays information of prohibiting the user from operating the smart health management sales system 10.

In a case that the user can operate the smart health management sales system 10, the user follows a voice that is of informing the user to clean hands and that is sent by the front speaker 14 driven by the processing unit 30, or the user views information that is of informing the user to clean hands and that is transmitted by the processing unit 30 to the sales touchscreen 18 and displayed on the sales touchscreen 18, and the user places hands at a spraying position where the inductive hand cleaning device 16 sprays a cleaning liquid. When an internal sensor (not shown) of the inductive hand cleaning device 16 senses that the hands of the user are at the spraying position where the cleaning liquid is sprayed, the inductive hand cleaning device 16 sprays the cleaning liquid on the hands of the user to clean the hands of the user, and the inductive hand cleaning device 16 transmits a sprayed cleaning liquid signal to the processing unit 30.

When detecting that a remaining volume of the cleaning liquid is less than a preset minimum remaining volume, the inductive hand cleaning device 16 sends a warning message to the processing unit 30. The processing unit 30 transmits a reminder message of replenishing a cleaning liquid to the sales touchscreen 18 according to the warning message, and displays the reminder message of replenishing a cleaning liquid on a display picture of the sales touchscreen 18, or the processing unit 30 transmits a reminder voice of replenishing a cleaning liquid to the front speaker 14 according to the warning message, and the front speaker 14 sends the reminder voice of replenishing a cleaning liquid to inform management staff to replenish a cleaning liquid.

When receiving the sprayed cleaning liquid signal transmitted by the inductive hand cleaning device 16, the processing unit 30 transmits a form item of the smart health management sales system 10 to the sales touchscreen 18, and displays the form item such as a menu of a restaurant on the sales touchscreen 18 for the user to select. The user selects an item of the form item such as the menu on the sales touchscreen 18, and the sales touchscreen 18 transmits the selected item of the form item to the processing unit 30.

After receiving the selected item of the form item transmitted by the sales touchscreen 18, the processing unit 30 transmits a payment amount of the corresponding selected item of the form item to the sales touchscreen 18, and displays the payment amount on the sales touchscreen 18 for the user to view. The processing unit 30 drives the electronic currency payment sensing device 20, and the user uses a smartphone at a barcode/QRcode scanner 202 of the electronic currency payment sensing device 20 to make an electronic currency payment or to make a credit card payment at a radio frequency identification (RFID) sensor 204 of the electronic currency payment sensing device 20, to pay an amount corresponding to the selected item of the form item, and the electronic currency payment sensing device 20 transmits a payment result to the processing unit 30.

When the user completes the payment at the electronic currency payment sensing device 20, the processing unit 30 drives the receipt printing device 22 to print a receipt or an invoice of a payment amount paid to the electronic currency payment sensing device 20 for the user to keep for future use.

After the user completes the payment, the processing unit 30 transmits the selected item of the form item (such as a menu) to, for example, a rear touchscreen 24 in a kitchen, the rear touchscreen 24 receives and displays the item of the form item transmitted by the processing unit 30, and kitchen staff prepares the selected item of the form item. After completing the selected item of the form item, the kitchen staff inputs and displays a processing result of the completed selected item of the form item on the rear touchscreen 24, and the rear touchscreen 24 transmits the processing result to the processing unit 30.

The processing unit 30 transmits the processing result to the display screen 26, and the display screen 26 displays the processing result transmitted by the processing unit 30 for the user to view and know that the selected item of the form item has been completed. In addition, the processing unit 30 drives the rear speaker 28 to send a voice of the processing result transmitted by the processing unit 30, so that the user knows that the selected item of the form item has been completed.

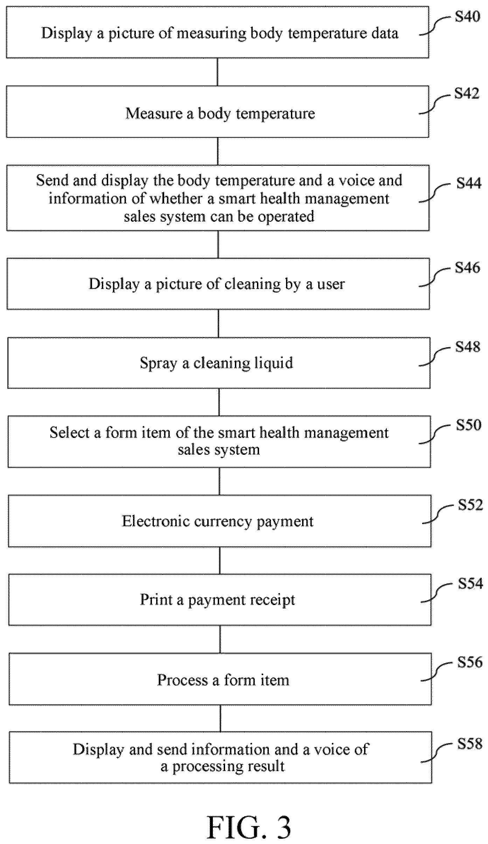

FIG. 3 is a flowchart of an operation method of the smart health management sales system according to the present invention. Refer to the schematic appearance diagram in FIG. 1 and the system block diagram in FIG. 2 when describing process steps in FIG. 3.

In FIG. 3, a user wants to operate the smart health management sales system 10 to order a meal. The processing unit 30 drives the sales touchscreen 18 to display a display picture of measuring body temperature data, and the processing unit 30 may also drive the front speaker 14 to send a voice of measuring body temperature data to inform the user to measure a body temperature (step S40).

When the user operating the smart health management sales system 10 is at a position where the body temperature sensor 12 senses a body temperature of the user, the processing unit 30 drives the body temperature sensor 12 to sense the body temperature of the user to generate body temperature data, and the body temperature sensor 12 transmits the measured body temperature data to the processing unit 30 (step S42).

The processing unit 30 determines, according to the body temperature data transmitted by the body temperature sensor 12, whether to prohibit from operating or enable to operate the smart health management sales system 10. For example, when the body temperature data measured by the user exceeds a normal healthy body temperature range, the processing unit 30 prohibits the user from operating the smart health management sales system 10, and reminds the user to go to a doctor as soon as possible. The front speaker 14 sends a reminder message of cleaning the smart health management sales system 10 to inform backend staff to implement a whole machine cleaning procedure of the smart health management sales system 10, to ensure that a next user is protected from a risk of being infected. On the contrary, the user can operate the smart health management sales system 10.

According to a determining result of the body temperature data, the processing unit 30 drives the front speaker 14 to send a voice of body temperature data obtained by the user in measuring a body temperature, and a voice of prohibiting the user from operating or enabling the user to operate the smart health management sales system 10. Similarly, the processing unit 30 transmits the determining result of the body temperature data to the sales touchscreen 18, to display, on a display picture of the sales touchscreen 18, information of the body temperature data obtained by the user in measuring a body temperature, and information of prohibiting the user from operating or enabling the user to operate the smart health management sales system 10 (step S44).

For example, in a case that the body temperature of the user does not exceed the normal healthy body temperature range, the processing unit 30 drives the front speaker 14 to send a voice of body temperature data obtained by the user in measuring a body temperature, and a voice of enabling the user to operate the smart health management sales system 10. On the contrary, the front speaker 14 sends a voice of body temperature data obtained by the user in measuring a body temperature, and a voice of prohibiting the user from operating the smart health management sales system 10. In this case, the sales touchscreen 18 also displays the body temperature data obtained by the user in measuring the body temperature, and displays information of enabling the user to operate the smart health management sales system 10. On the contrary, the sales touchscreen 18 displays the body temperature data obtained by the user in measuring the body temperature, and displays information of prohibiting the user from operating the smart health management sales system 10.

When the user is prohibited from operating the smart health management sales system 10, the processing unit 30 transmits a reminder message of cleaning the smart health management sales system 10 to the sales touchscreen 18, and displays the reminder message of cleaning the smart health management sales system 10 on a display picture of the sales touchscreen 18, or the processing unit 30 transmits a reminder voice of cleaning the smart health management sales system 10 to the front speaker 14, and the front speaker 14 sends a reminder message of cleaning the smart health management sales system 10 to inform backend staff to implement a whole machine cleaning procedure of the smart health management sales system 10, to ensure that a next user is protected from a risk of being infected.

In a case that the user can operate the smart health management sales system 10, the user follows a voice that is of informing the user to clean hands and that is sent by the front speaker 14 driven by the processing unit 30, or the user views information that is of informing the user to clean hands and that is transmitted by the processing unit 30 to the sales touchscreen 18 and displayed on a display picture of the sales touchscreen 18, and the user knows to place hands at a spraying position where the inductive hand cleaning device 16 sprays a cleaning liquid (step S46).

When an internal sensor of the inductive hand cleaning device 16 senses that the hands of the user are at the spraying position where the cleaning liquid is sprayed, the inductive hand cleaning device 16 sprays the cleaning liquid on the hands of the user to clean the hands of the user, and the inductive hand cleaning device 16 transmits a sprayed cleaning liquid signal to the processing unit 30 (step S48).

When detecting that a remaining volume of the cleaning liquid is less than a preset minimum remaining volume, the inductive hand cleaning device 16 sends a warning message to the processing unit 30. The processing unit 30 transmits a reminder message of replenishing a cleaning liquid to the sales touchscreen 18 according to the warning message, and displays the reminder message of replenishing a cleaning liquid on a display picture of the sales touchscreen 18, or the processing unit 30 transmits a reminder voice of replenishing a cleaning liquid to the front speaker 14 according to the warning message, and the front speaker 14 sends the reminder voice of replenishing a cleaning liquid to inform management staff to replenish a cleaning liquid.

When receiving the sprayed cleaning liquid signal transmitted by the inductive hand cleaning device 16, the processing unit 30 transmits a form item of the smart health management sales system 10 to the sales touchscreen 18, and displays the form item such as a menu of a restaurant on a display picture of the sales touchscreen 18 for the user to select. The user selects an item of the form item such as the menu on a display picture of the sales touchscreen 18, and the sales touchscreen 18 transmits the selected item of the form item to the processing unit 30 (step S50).

After receiving the selected item of the form item transmitted by the sales touchscreen 18, the processing unit 30 transmits a payment amount of the corresponding selected item of the form item to the sales touchscreen 18, and displays the payment amount on a display picture of the sales touchscreen 18 for the user to view.

Next, the processing unit 30 drives the electronic currency payment sensing device 20, and the user scans a payment barcode or QRcode on a touchscreen of a smartphone at a barcode/QRcode scanner 202 of the electronic currency payment sensing device 20 to make an electronic currency payment or senses a credit card to make a credit card payment at a radio frequency identification (RFID) sensor 204 of the electronic currency payment sensing device 20, to pay an amount corresponding to the selected item of the form item, and the electronic currency payment sensing device 20 transmits a payment result to the processing unit 30 (step S52).

When the user completes the payment at the electronic currency payment sensing device 20, the processing unit 30 drives the receipt printing device 22 to print a receipt or an invoice of a payment amount paid to the electronic currency payment sensing device 20 for the user to keep for future use (step S54).

After the user completes the payment, the processing unit 30 transmits the selected item of the form item (such as a menu) to, for example, a rear touchscreen 24 in a kitchen, the rear touchscreen 24 receives and displays the item of the form item transmitted by the processing unit 30, and kitchen staff prepares the selected item of the form item. After completing the selected item of the form item, the kitchen staff inputs and displays a processing result of the completed selected item of the form item on the rear touchscreen 24, and the rear touchscreen 24 transmits the processing result to the processing unit 30 (step S56).

The processing unit 30 transmits the processing result to the display screen 26, and a display picture of the display screen 26 displays the processing result transmitted by the processing unit 30 for the user to view and know that the selected item of the form item has been completed. In addition, the processing unit 30 drives the rear speaker 28 to send a voice of the processing result transmitted by the processing unit 30, so that the user knows that the selected item of the form item has been completed (step S58).

The present invention provides a smart health management sales system and method, which are characterized by preventing in advance a carrier infected with a highly infectious disease from operating an electronic ordering device, and cleaning hands or body of a user operating the electronic ordering device, thereby reducing a risk of being infected with a highly infectious disease for the user operating the electronic ordering device.

Although the present invention has been described above with reference to preferred specific examples and the accompanying drawings, it should not be regarded as a limit. A person skilled in the art can make various modifications, omissions and changes to the form and the content of the specific examples, without departing from the claimed scope of the claims of the present invention.

## Claims

1. A smart health management sales system, comprising:
a processing unit, determining, according to body temperature data, whether to prohibit from operating or enable to operate the smart health management sales system;
a body temperature sensor, driven by the processing unit to sense a body temperature of a user to generate the body temperature data, and transmitting the body temperature data to the processing unit;
an inductive hand cleaning device, when sensing that hands of the user are at a spraying position where a cleaning liquid is sprayed, spraying the cleaning liquid, and transmitting a sprayed cleaning liquid signal to the processing unit; and
a sales touchscreen, receiving and displaying the body temperature data transmitted by the processing unit, information of cleaning hands of the user, and information of prohibiting from operating or enabling to operate the smart health management sales system, selecting a form item of the smart health management sales system on the sales touchscreen after the processing unit receives the sprayed cleaning liquid signal, and transmitting the selected form item to the processing unit.

2. The smart health management sales system according to claim 1, further comprising a front speaker, driven by the processing unit to send a voice of the body temperature data, a voice of measuring a body temperature, and a voice of prohibiting from operating or enabling to operate the smart health management sales system, and a voice of cleaning hands of the user.

3. The smart health management sales system according to claim 2, wherein when the inductive hand cleaning device detects that a remaining volume of the cleaning liquid is less than a preset minimum remaining volume, the inductive hand cleaning device sends a warning message to the processing unit, and the processing unit transmits a reminder message of replenishing a cleaning liquid to the sales touchscreen according to the warning message, and displays the reminder message of replenishing a cleaning liquid on the sales touchscreen, or the processing unit transmits a reminder voice of replenishing a cleaning liquid to the front speaker according to the warning message, and the front speaker sends the reminder voice of replenishing a cleaning liquid.

4. The smart health management sales system according to claim 1, further comprising:
an electronic currency payment sensing device, driven by the processing unit to make an electronic currency payment by using a smartphone or make a credit card payment, wherein a payment amount is an amount corresponding to the processing unit according to the form item; and
a receipt printing device, driven by the processing unit to print a receipt of a payment amount paid to the electronic currency payment sensing device.

5. The smart health management sales system according to claim 1, further comprising:
a rear touchscreen, receiving and displaying the form item transmitted by the processing unit, inputting and displaying a processing result of processing the form item, and transmitting the processing result to the processing unit; and
a display screen, displaying the processing result transmitted by the processing unit.

6. The smart health management sales system according to claim 5, further comprising a rear speaker, driven by the processing unit to send a voice of the processing result transmitted by the processing unit.

7. A smart health management sales method, applied to a smart health management sales system, wherein the smart health management sales method comprises the following steps:
driving, by a processing unit of the smart health management sales system, a body temperature sensor of the smart health management sales system to sense a body temperature of a user to generate body temperature data, and transmitting, by the body temperature sensor, the body temperature data to the processing unit;
receiving and displaying, by a sales touchscreen of the smart health management sales system, the body temperature data transmitted by the processing unit, information of cleaning hands of the user, and information of prohibiting from operating or enabling to operate the smart health management sales system;
when an inductive hand cleaning device of the smart health management sales system senses that hands of the user are at a spraying position where a cleaning liquid is sprayed, spraying, by the inductive hand cleaning device, the cleaning liquid; and
selecting a form item of the smart health management sales system on the sales touchscreen after the processing unit receives the sprayed cleaning liquid signal, and transmitting the selected form item to the processing unit.

8. The smart health management sales method according to claim 7, wherein before the step of receiving and displaying, by the sales touchscreen, the body temperature data transmitted by the processing unit, the method further comprises: driving, by the processing unit, a front speaker of the smart health management sales system to send a voice of the body temperature data.

9. The smart health management sales method according to claim 7, wherein in the step of receiving and displaying, by the sales touchscreen, the body temperature data transmitted by the processing unit, the method further comprises: driving, by the processing unit, a front speaker of the smart health management sales system to send a voice of the body temperature data, and a voice of prohibiting from operating or enabling to operate the smart health management sales system, and when body temperature data measured by the user exceeds a normal healthy body temperature range, wherein besides prohibiting the user from operating the smart health management sales system and reminding the user to go to a doctor as soon as possible, the front speaker sends a reminder message of cleaning the smart health management sales system to inform backend staff to implement a whole machine cleaning procedure of the smart health management sales system to ensure that a next user is protected from a risk of being infected.

10. The smart health management sales method according to claim 7, wherein before the step of spraying, by the inductive hand cleaning device, the cleaning liquid, the method further comprises the following steps: driving, by the processing unit, a front speaker of the smart health management sales system to send a voice of cleaning hands of the user.

11. The smart health management sales method according to claim 10, wherein when the inductive hand cleaning device detects that a remaining volume of the cleaning liquid is less than a preset minimum remaining volume, the inductive hand cleaning device sends a warning message to the processing unit, and the processing unit transmits a reminder message of replenishing a cleaning liquid to the sales touchscreen according to the warning message, and displays the reminder message of replenishing a cleaning liquid on the sales touchscreen, or the processing unit transmits a reminder voice of replenishing a cleaning liquid to the front speaker according to the warning message, and the front speaker sends the reminder voice of replenishing a cleaning liquid.

12. The smart health management sales method according to claim 7, wherein after the step of selecting the form item of the smart health management sales system on the sales touchscreen, the method further comprises the following steps:
driving, by the processing unit, an electronic currency payment sensing device of the smart health management sales system to make an electronic currency payment by using a smartphone or make a credit card payment, wherein a payment amount is an amount corresponding to the processing unit according to the form item; and
driving, by the processing unit, a receipt printing device of the smart health management sales system to print a receipt of a payment amount paid to the electronic currency payment sensing device.

13. The smart health management sales method according to claim 7, wherein after the step of selecting the form item of the smart health management sales system on the sales touchscreen, the method further comprises the following steps:
receiving and displaying, by a rear touchscreen of the smart health management sales system, the form item transmitted by the processing unit, inputting and displaying a processing result of processing the form item, and transmitting the processing result to the processing unit; and
displaying, by a display screen of the smart health management sales system, the processing result transmitted by the processing unit.

14. The smart health management sales method according to claim 13, wherein in the step of displaying, by the display screen, the processing result transmitted by the processing unit, the method further comprises: driving, by the processing unit, a rear speaker of the smart health management sales system to send a voice of the processing result transmitted by the processing unit.
